# EUROPEAN PATENT APPLICATION

(11) **EP 0 629 538 A1**
(43) Date of publication of application: **21.12.1994**
(21) Application number: 94830285.6
(22) Date of filing: 10.06.1994
(51) Int. Cl.: B62B 3/02, A21B 3/07

(54) **Modular structure trolley supporting trays for oven products or the like**

(30) Priority: 15.06.1993 IT VR930027 U
(71) Applicant: Mamoli, Romano, Castel d'Azzano (Verona) (IT); Caliari, Romano, Castel d'Azzano (Verona) (IT)
(72) Inventor: Mamoli, Romano, Castel d'Azzano (Verona) (IT); Caliari, Romano, Castel d'Azzano (Verona) (IT)
(74) Representative: Sarpi, Maurizio

(57) **Abstract**

The present invention proposes a trolley supporting trays to be used preferably for oven products to be processed. The present trolley is carried out with a new constructive assembling method according to which just a few modular elements are to be realized and developed, the construction and mounting of such modular elements being easy.

In general, a trolley (1) according to the present invention consists of modular components which are horizontal longitudinal members (2), die-cast angular unions (3), spacers (4) and structurals (5) that support the trays. On the whole, such elements form a parallelepiped-shaped frame which is locked by locking vertical tubes (6) showing a square or round section, the dimensions of such tubes being smaller than those of the spacers (4).

The vertical construction of the trolley is carried out by alternating spacers (4) and structurals (5), the structurals being inserted in the vertical tubes (6).

The construction is locked by means of a locking joint (11) which is inserted in the ends of the tubes (6).

## Description

The present patent for invention refers to a trolley for supporting trays for oven products or the like, such trolley being carried out with a sectional modular structure.

As it is known, the production of oven goods or the like, for instance in the field of bread-making or in the field of the confectionery, provides that the product has to be mixed, shaped and positioned on collecting trays or plates. Then, such trays or plates are inserted in movable trolleys which carry the product to be processed for instance to the leavening and baking sector.

At present, the trolleys that support and carry the above-described trays are carried out by forming a supporting structure or frame which consist of metallic structurals of different lengths. The structurals are usually assembled by soldering them so as to form an essentially prismatic four-side frame onto which hangers are in turn soldered to support the trays.

As it can be seen, the realization of the known trolleys, as it is carried out at present, involves too much work, above all when considering the large number of components to be used. In fact, the assembling procedure is too long and as as consequence of this, the production and sale cost becomes high.

The object of the present invention is the elimination or at least the reduction of the above-described inconveniences which are caused by the complexity in the production and construction of the trolleys that support the plates or the like for the oven products, and in particular the use of a new constructive method that provides just a few modular elements to be carried out and developed, such modular elements being simple as concerns their construction and assembling and permitting to obtain frames of any size depending on the number of the modular components used and there is no more the necessity of realizing more assemblies and elements with single function to be produced separately and assembled and soldered to each other in several subsequent phases.

In the range of the aforesaid general object, the present invention proposes also that the trolleys in question may be assembled by connecting limited types of modular components and the phases for the realization of the components have been facilitated in order to make the work in the workshop of production easier.

Furthermore, the modular components according to the present invention may be produced in a large quantity and stored in a restricted space since there is a limited number of types of such modular components and their dimensions are small. In this way, the shipment phases are simpler since the modular pieces may be transported disassembled and then, the pieces may be assembled in a short time so as to obtain the trolley in the place of destination directly.

The above-described particular objects and functions are all reached according to the present invention by a modular structure trolley supporting trays or the like for oven products, characterized by the fact of consisting of an assembly of horizontal longitudinal members, die-cast angular unions, spacers and structurals supporting the trays, such components being designed to form a parallelepiped-shaped frame, locked by vertical tubes equipped with connecting and locking die-cast elements; the structurals form several overlapped, symmetrical supporting levels in respect of both opposite sides of the frame and comprise holes permitting their insertion in the vertical tubes between the spacers; the vertical tubes are arranged between two angular unions, opposite vertically, of each edge of the frame and are locked by screws or the like provided in the connecting elements so that the whole assembled structure may remain firm and locked.

Other features and details of the present invention are better explained in the following description that illustrates a preferred embodiment as an example not limiting the invention as well as in the accompanying drawing wherein:
Fig. 1 shows a schematic, perspective, exploded view with the components of a trolley according to the invention;
Fig. 2 shows a schematic front view of the trolley assembled;
Fig. 3 shows a schematic side view of the trolley;
Fig. 4 shows a schematic plan view of the trolley assembled;

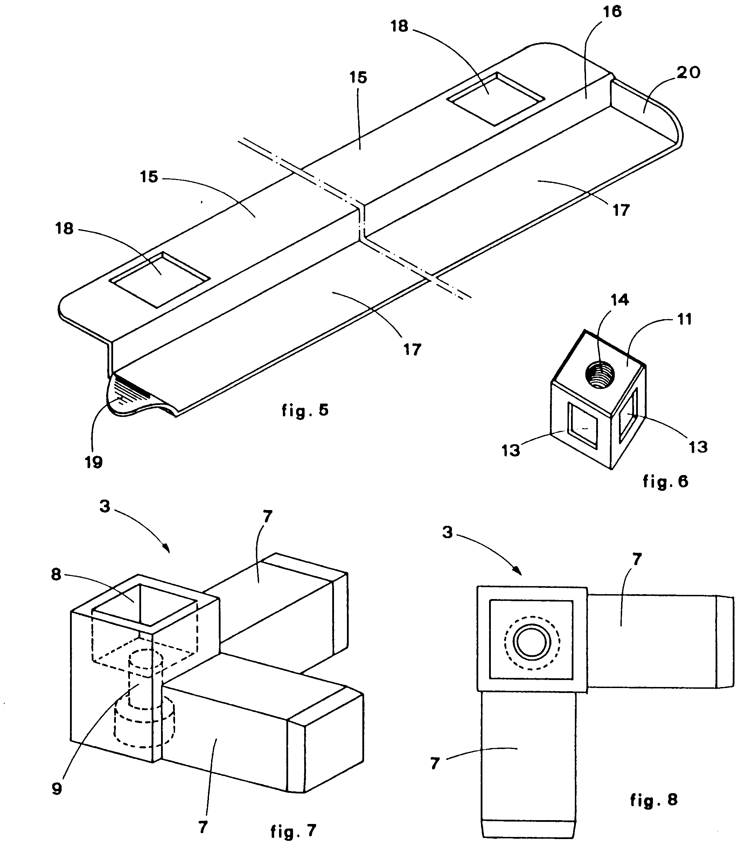

Fig. 5 shows a schematic detailed view of a structural designed to support a tray;
Fig. 6 shows a schematic view of a connecting die-cast element;
Figg. 7 and 8 show schematic detailed views of the angular supporting elements, perspective and plan respectively.

With reference to the accompanying drawing, number 1 denotes a trolley according to the present invention in general.

Such a trolley supports trays or other similar elements on which oven products are put, for instance dough for making bread or other similar goods to be processed and baked.

The peculiarity of the present invention consists in a series of modular components which are shaped in such a way as to make the assembling of the trolley 1 simple and rapid.

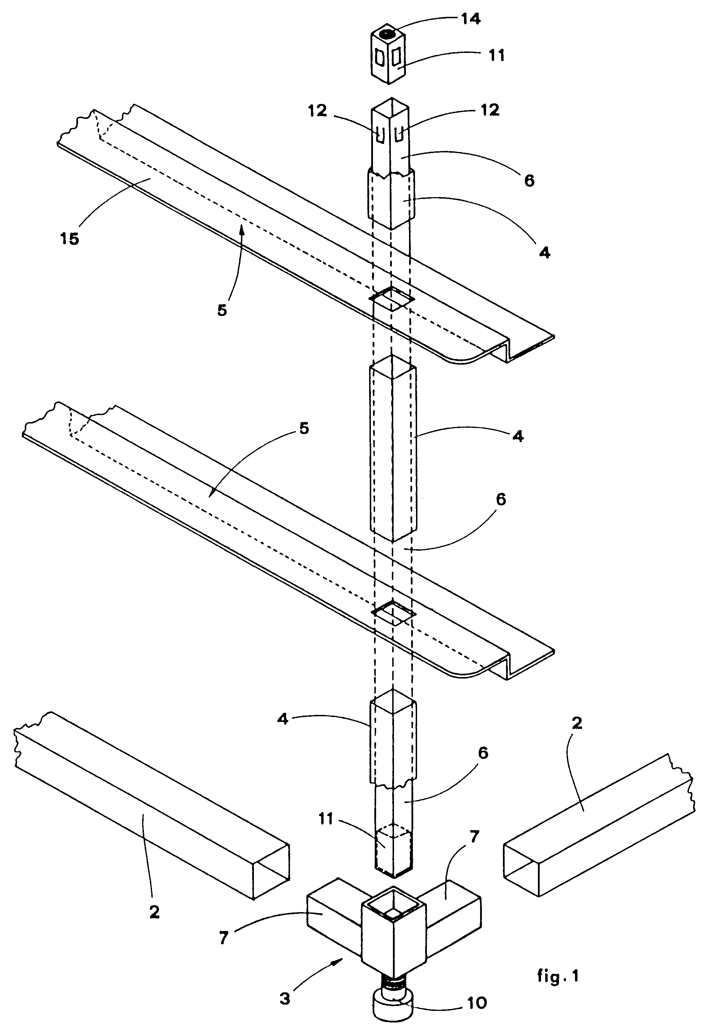

As it can be seen in Fig. 1, the modular components are represented by horizontal longitudinal members 2, die-cast angular unions 3, spacers 4 and structurals 5 supporting the trays. On the whole, such components form a parallelepiped-shaped frame which is locked by vertical locking tubes 6 showing a square or round section, the dimensions of such tubes being smaller than those of the spacers 4.

In the present example, the trolley shows a four-side shape and therefore, there are four lower angular unions as well as four upper angular unions, connected by horizontal longitudinal members 2 respectively. The horizontal longitudinal members 2 are mounted on appendixes 7 of the angular unions, such appendixes being arranged horizontally and orthogonally to each other.

The angular unions 3 comprise also a seat 8 for housing the ends of the vertical locking tubes 6. A hole 9 is provided in the middle of the seat 8 and a locking screw 10 is introduced in such a hole.

The vertical construction of the trolley is obtained by alternating spacers 4 and structurals 5, the latter being inserted in the vertical tubes 6. The locking position is caused by a locking joint 11 which is mounted on the ends of the vertical tubes 6.

More precisely, the said joints 11 are die-cast and are formed by a block which is shaped in such a way as to be inserted in the ends of the tubes. The block is secured in the ends by means of elastic tongues 12 which are provided on the tubes and may be introduced in corresponding seats 13 of the joints 11.

The joints comprise a threaded hole 14 in which locking screws 10 are introduced.

The purpose of the structurals 5 is to form a horizontal support for the trays. The structural 5 has a longitudinal shape, determined by an outer horizontal plane 15, connected through a vertical surface 16 with a second horizontal plane 17, the latter being in a lower position than the former and being also turned towards the inner part of the trolley so as to form a support for the trays.

The outer horizontal plane 15 is provided with two holes 18 for inserting the structurals in the tubes 6 while the horizontal plane 17 is provided with a front tongue 19 and a plate 20. The front tongue 19 is arranged on the fore end of the horizontal plane 17 to lock the tray. The plate 20 is arranged on the rear end of the horizontal plane 17 and forms the stop for the tray.

Each spacer 4 is formed by a square structural the size of which corresponds to the interdistance between the planes of the trolley. Moreover, the size of the spacers 4 is greater than the size of the tubes 6 in which the spacers are inserted. The assembling of the present trolley provides the formation of a base by connecting four angular unions with four horizontal longitudinal members. Then, four locking tubes 6 are introduced in the angular unions, such tubes being equipped with locking joints 11. An alternate series of spacers 4 and supporting structurals 5 is finally arranged on the tubes 6.

When the tubes are introduced in the seat 8 of the angular unions 3, the spacers 4 remain beaten on the upper border of the angular unions.

A set screw 10 is turned in the threaded holes 14 of each joint 11 of the tubes 6 in order to lock the so-assembled structure, such screw being inserted in the holes 9 of each angular union.

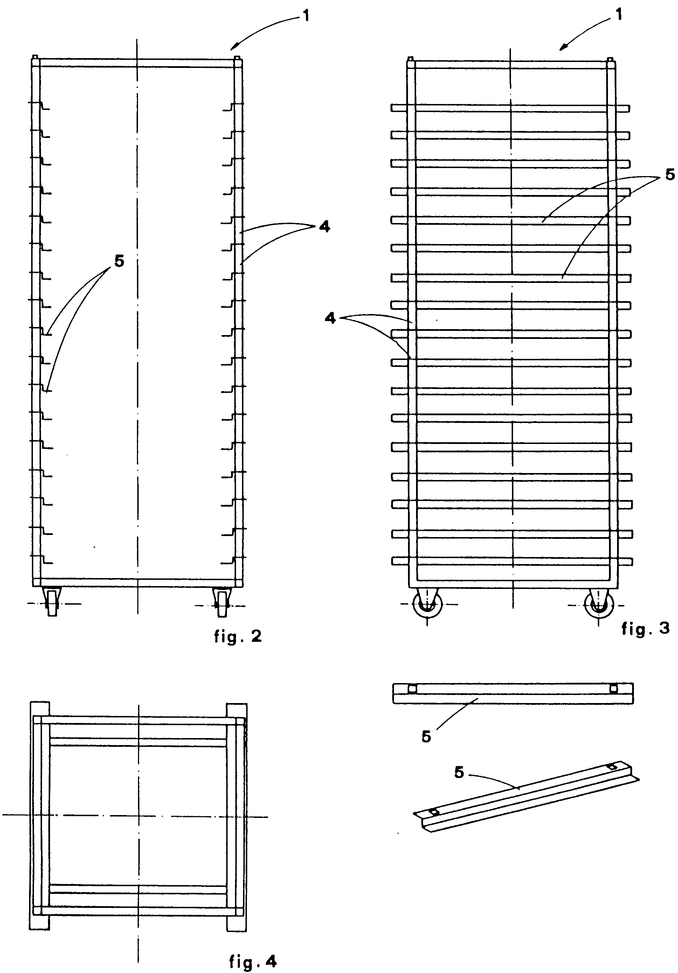

As it can be seen from the Figg. 2 and 3, the alternate series of spacers and supporting structurals forms a series of supports on which it is possible to lay the trays containing the oven product to be processed.

As it can be seen, the assembling of the trolley according to the present invention is very simple and the trolley may be assembled also directly in the place of use in a short time.

The trolley in question has been described and represented according to a preferred embodiment but there may be variants equivalent to the aforesaid mechanical parts or components, such variants being included in the range of protection of the present invention.

## Claims

1. Modular structure trolley supporting trays or the like for oven products or the like, characterized in particular by the fact that it consists of an assembly of horizontal longitudinal members (2), die-cast angular unions (3), spacers (4) and structurals (5) supporting the trays, a parallelepiped-shaped frame being formed by such components and being locked by locking vertical tubes (6); the supporting structurals (5) form more overlapped, symmetrical levels in respect of both opposite sides of the frame and are provided with holes (18) so that the structurals (5) may be inserted in the tubes (6) between the spacers (4).

2. Modular structure trolley as claimed in Claim 1, characterized by the fact that the assembling of the trolley provides the formation of a base by connecting four angular unions (3) with four horizontal longitudinal members (2), the insertion of four locking tubes (6), equipped with locking joints (11), in the angulars (3) and the subsequent insertion of an alternate series of spacers (4) and supporting structurals (5) in the tubes (6).

3. Modular structure trolley as claimed in the foregoing claims, characterized by the fact that the vertical locking tubes (6) are arranged between two angular unions (3), opposite vertically, of each edge of the frame and are locked by screws (10) or the like which are inserted in locking joints (11) with which the tubes are provided.

4. Modular structure trolley as claimed in the foregoing claims, characterized by the fact that the horizontal longitudinal members (2) are inserted on appendixes (7) of the angular unions (3), such appendixes being arranged horizontally and orthogonally to each other.

5. Modular structure trolley as claimed in the foregoing claims, characterized by the fact that each angular union (3) is also provided with a seat (8) in which a vertical locking tube (6) may be housed.

6. Modular structure trolley as claimed in the foregoing claims, characterized by the fact that each structural (5) is provided with an outer horizontal plane (15) which is connected through a connecting vertical surface (16) with a second horizontal plane (17) which is lower than the former and is turned towards the inner part of the trolley so as to form the support for the tray.

7. Modular structure trolley as claimed in the foregoing claims, characterized by the fact that the outer horizontal plane (15) of each supporting structural (5) is provided with two holes (18) in which the vertical locking tubes (6) may be inserted.
